# EUROPEAN PATENT APPLICATION

(11) **EP 3 643 917 A1**
(43) Date of publication of application: **29.04.2020**
(21) Application number: 19204895.7
(22) Date of filing: 23.10.2019
(51) Int. Cl.: F03D 13/40, B65D 61/00

(54) **TRANSPORT FRAME FOR LARGE ITEMS**

(30) Priority: 24.10.2018 DK PA201800768
(71) Applicant: Viggo Jespersen Holding APS, 5700 Svendborg (DK)
(72) Inventor: JESPERSEN, Viggo, 5881 Skårup Fyn (DK)
(74) Representative: Skov, Anders

(57) **Abstract**

A transportation module (100) for receiving and transportation of relatively large items (2) in the form of a foundation for a nacelle for a wind turbine is disclosed.

The transportation module in the orientation intended during use comprises a frame (4);
wherein said frame comprises a first support post (6) which is mounted on said frame (4);
wherein said frame comprises a second support post (8), which is mounted on said frame (4);
wherein said frame comprises a first pivoting beam (10) which is being pivotally suspended on said first support post (6);
wherein said frame comprises a second pivoting beam (12) which is being pivotally suspended on the second support post (8);
wherein said first pivoting beam (10) is being suspended on said first support post (6) via a first set of primary actuators (14) which are being configured for being able to alter the position of the first pivoting beam between a folded-down orientation and an upright orientation and vice versa;
wherein said second pivoting beam (12) is being suspended on said second support post (8) via a second set of primary actuators (16) which are being configured for being able to alter the position of said second pivoting beam between a folded-down orientation and an upright orientation and vice versa.

## Description

### Field of the invention

The present invention relates to the general field of transportation of large items. More specifically, the present invention relates in a first aspect to a transportation module for transporting relatively large items. In a second aspect the present invention relates to the use of the transportation module according to the first aspect of the invention for transporting of relatively large items. In its third aspect the present invention relates to a method for transportation of relatively large items.

### Background of the invention

The wind turbine industry has in the latest decades continuously undertaken a technological development and it is a fact that wind turbines in this period of time manifest themselves as a source of energy which increasingly becomes part of various nations' infrastructure and as a basis for an energy source.

Concurrently with the production and erection of more and more wind turbines the technological development of wind turbines has implied that wind turbines with continuously increasing sizes, not just as measured in produced power but also as measured in physical sizes, are being developed and produced.

As the individual elements of a wind turbine often is produced far from the place where the wind turbine is going to be installed certain challenges exist when elements having a certain large size are going to be transported from the production site to the site for installation of the wind turbine.

One type of element for a wind turbine, which according to the continuously increasing sizes of wind turbines represent challenges regarding transportation are foundations for nacelles.

A foundation for a nacelle is typically made up of a steel structure which acts as a chassis for the nacelle. The foundation is arranged on top of the wind turbine tower at a flange thereof and the rotor, the rotor axle, the generator and the gearbox of the wind turbine are being supported by the foundation. The foundation itself is often covered with an outer coating for protection of the interior of the nacelle and for providing an aesthetic appearance.

A foundation for a nacelle is typically having its longest extension in a direction corresponding to the rotor axle of the wind turbine. Similarly, a foundation for a nacelle is typically having its smallest extension in a direction corresponding to the height direction of the nacelle. In a third direction, which is perpendicular to the direction of the rotor axle and which is perpendicular to the direction of the height of the nacelle, the foundation will typically have an extension having a magnitude between the two previous mentioned sizes.

Upon transportation of foundations for nacelles the nacelle has traditionally being arranged on the transportation means, optionally by using a transportation frame, in such an orientation that the nacelle foundation is having the same orientation as when being mounted on top of a wind turbine tower and in such a way that the rotor axle is being parallel to the direction of driving movement.

Hereby, the largest extension of the nacelle foundation will extend along the direction of driving, which means that it is not the largest extension of the foundation which leads to nuisances for the traffic. Another advantage of this orientation upon transportation of a nacelle foundation is that when the nacelle foundation is having its natural orientation during transportation it is easy to secure the foundation to the transportation means because the underside of the nacelle foundation typically comprises a plurality of holes for cables etc. These holes may thus be used for securing the foundation to the transportation means or a frame therefor.

However, the extension of the nacelle foundation in a width direction (that is, in the direction which is perpendicular to the rotor axle as well as to the height direction of the nacelle foundation) in this preferred orientation transport will extend transversal to the direction of driving.

Along with the ever-increasing sizes of wind turbines and the associated elements this traditional orientation of a nacelle foundation represents particularly large challenges upon transportation.

This challenge typically involves finding routes which physically will allow transportation af a nacelle foundation in this orientation. Other challenges involve obtaining the necessary permissions from the traffic authorities for conducting such as transportation, to arrange escort during transportation, to recognize the necessary lower transportation speed with its associated longer transportation time along with expenses and time needed for preparation before transportation is possible.

On could imagine that it would be possible to transport a nacelle foundation upright, i.e. in an orientation in which the associated rotor axle of the foundation is being parallel with the direction of driving and wherein the height direction of the foundation is transversal to the direction of driving.

Hereby reduction of the width of transportation could be attained.

With the size and weight exhibited by the largest nacelle foundations being produced today it will however be difficult to have the nacelle foundation safe and securely arranged in this orientation in which the width of transportation is reduced.

Accordingly, there exist a need for an improved transportation module for transportation of relatively large items, such as nacelle foundations for wind turbines which allows safe transportation of such relatively large items and which exhibits a minimum of space requirement in a width direction during transport.

It is an objective of the present invention to provide such transportation modules.

### Brief description of the invention

This objective is fulfilled according to the first aspect of the present invention with a transportation module for transportation of relatively large items in the form of a foundation for a nacelle for a wind turbine, wherein said transportation module in the orientation intended during use comprises a frame:
wherein said frame comprises a first support post which is mounted on said frame;
wherein said frame comprises a second support post, which is mounted on said frame;
wherein said frame comprises a first pivoting beam which is being pivotally suspended on said first support post;
wherein said frame comprises a second pivoting beam which is being pivotally suspended on the second support post;
wherein said first pivoting beam is being suspended on said first support post via a first set of primary actuators which are being configured for being able to alter the position of the first pivoting beam between a folded-down orientation and an upright orientation and vice versa;
wherein said second pivoting beam is being suspended on said second support post via a second set of primary actuators which are being configured for being able to alter the position of said second pivoting beam between a folded-down orientation and an upright orientation and vice versa.

In a second aspect according to the present invention is provided a use of a transportation module of the first aspect of the present invention for transportation of relatively large items.

According to a third aspect of the present invention is provided a method for transportation of relatively large items, wherein the method comprises the following steps:
i) providing a transportation module according to the first aspect of the present invention;
ii) if present, optionally extracting the support leg(s) to an extracted configuration;
iii) bringing the first pivoting beam and the second pivoting beam in a folded-down position via said first set of primary actuators and said second set of primary actuators;
iv) arranging the relatively large item on top of the first pivoting beam and the second pivoting beam and fastening said item to said first pivoting beam and the second pivoting beam;
v) bringing said first pivoting beam and said second pivoting beam into an upright position via said first set of primary actuators and said second set of primary actuators;
vi) if present, optionally retracting said support leg or support legs;
vii) transporting said relatively large item on said transportation module.

With the invention in its various aspects an easy and efficient means for transportation of large items, such as foundations for a nacelle for a wind turbine is attained, with which safe securing of the item, which is to be transported, is being combined with a minimum width of transportation on a road whereupon the transportation is taking place.

Moreover, with the invention is hereby easily attained that large items can be transported with a single lorry without the need for mandatory use of escort vehicle, as required due to too large width of transportation.

### Brief description of the figures

Fig. 1 shows in a perspective view a nacelle foundation for a wind turbine which is going to be transported on a transportation module according to the present invention.
Fig. 2 shows in a perspective view a transportation module according to the invention, wherein the pivoting beams are in an upright orientation.
Fig. 3 shows in a perspective view a transportation module according to the invention, wherein the pivoting beams are in a folded-down orientation.
Fig. 4 shows in a perspective view a transportation module according to the invention, wherein the pivoting beams are in a folded-down orientation, and wherein a nacelle foundation has been arranged on the pivoting beams.
Fig. 5 shows the transportation module of Fig. 4 in which the pivoting beams have been pivoted to an upright orientation.
Fig. 6 is an illustration showing the working principle of the actuators which are employed for pivoting the pivoting beams and for displacement of the support legs.
Fig. 7 shows in a perspective view the transportation module according to the invention whereupon a nacelle foundation has been arranged and wherein additionally a superstructure has been mounted.

### Detailed description of the invention

The present invention relates in its first aspect to a transportation module for receiving and transportation of relatively large items in the form of a foundation for a nacelle for a wind turbine, wherein said transportation module in the orientation intended during use comprises a frame:
wherein said frame comprises a first support post which is mounted on said frame;
wherein said frame comprises a second support post, which is mounted on said frame;
wherein said frame comprises a first pivoting beam which is being pivotally suspended on said first support post;
wherein said frame comprises a second pivoting beam which is being pivotally suspended on the second support post;
wherein said first pivoting beam is being suspended on said first support post via a first set of primary actuators which are being configured for being able to alter the position of the first pivoting beam between a folded-down orientation and an upright orientation and vice versa;
wherein second pivoting beam is being suspended on said second support post via a second set of primary actuators which are being configured for being able to alter the position of said second pivoting beam between a folded-down orientation and an upright orientation and vice versa.

Accordingly, with the transportation module according to the first aspect of the present invention one may easily arrange a large item, such as a nacelle foundation for a wind turbine and subsequently turn this foundation to an orientation wherein, during transportation, a minimum of nuisance towards the traffic is attained, because the relatively large item takes up a minimum of space in a direction transversal to the road.

In the present description and in the appended claims the term "relatively large items" may be interpreted as items having an extension in the direction defining the largest extension, of 3.0 m or more, such as 3.5 meters or more, such as 4.0 meters or more, such as 4.5 meters or more, for example 5.0 meters or more, such as 5.5 meters or more; or 6.0 meters or more.

In an embodiment of the transportation module according to the first aspect of the invention, the frame comprises:
- a longitudinal girder having a first end and a second end;
- a first transversal girder;
- a second transversal girder;
wherein said first transversal girder is being connected to said longitudinal girder and wherein said second transversal girder is being connected to said longitudinal girder.

In an embodiment of the transportation module according to the first aspect of the invention, said first transversal girder is connected to said longitudinal girder at the first end thereof; and said second transversal girder is being connected to said longitudinal girder at the second end thereof.

Hereby adequate stability of the transportation module is attained, irrespective the orientation of the pivoting beams.

In an embodiment of the transportation module according to the first aspect of the invention said first pivoting beam comprises one or more fastening devices for fastening the item to be transported and/or said second pivoting beam comprises one or more fastening devices for fastening the item to be transported.

In an embodiment of the transportation module according to the first aspect of the invention said fastening device(s) on said first and/or said second pivoting beam independently comprise(s) protrusions or holes, such as treaded holes for fastening an item on said pivoting beam.

Hereby is by easy means made possible to attain a safe and reliable fixation of the item to the transportation module.

In one embodiment bolts and nuts may for example be used for fixation of the item to the transportation module.

In an embodiment of the transportation module according to the first aspect said first pivoting beam and said second pivoting beam are being connected via a common support frame.

Hereby improved structural integrity and stability of the transportation module is attained.

In an embodiment of the transportation module according to the first aspect of the invention said first pivoting beam and said second pivoting beam are configured to be able to move synchronically between the folded-down orientation and the upright orientation and vice versa.

Hereby is assured that the two pivoting beams are following each other in their respective pivoting movements and hereby a minimum of twisting of the item to be transported is attained.

In an embodiment of the transportation module according to the first aspect of the invention said first set of primary actuators and/or said second set of primary actuators independently is/are hydraulic actuators.

Hydraulic actuators have proved their strength for the desired purpose.

In an embodiment of the transportation module according to the first aspect of the invention said transportation module optionally comprises a first hydraulic valve, wherein said first hydraulic valve comprises an inlet for pressurized hydraulic fluid, and one or more outlets for pressurized hydraulic fluid, which is to be delivered to said first set of primary actuators and/or said second set of primary actuators; wherein said first hydraulic valve hereby, upon activation thereof, may effect bringing said first pivoting beam and/or said second pivoting beam to shift between said folded-down orientation and said upright orientation and vice versa.

Hereby is attained an easy way of controlling of the hydraulic actuators.

In an embodiment the transportation module may be provided with a hydraulic pump for providing pressurized hydraulic fluid to the actuator or the actuators on the transportation module. Alternatively, pressurized hydraulic fluid may be supplied to the actuator or the actuators on the transportation module via an external hydraulic pump, such as a hydraulic system in a vehicle.

In an embodiment of the transportation module according to the first aspect of the invention said first set of primary actuators and/or said second set of primary actuators independently is/are electric actuators.

Electric actuators have proved their strength for the desired purpose.

In an embodiment of the transportation module according to the first aspect of the invention said transportation module optionally comprises a first electrical relay, wherein said first electrically relay is being configured to, upon activation thereof, to effect bringing said first pivoting beam and/or said second pivoting beam to shift between said folded-down orientation and said upright orientation and vice versa.

Hereby is attained an easy way of controlling the electric actuators.

In an embodiment of the transportation module according to the first aspect of the invention said frame comprises one or more support leg arrangements, wherein each support leg arrangement comprises a support leg, wherein each support leg is being configured for being able to shift between an extracted configuration and a retracted configuration, wherein each support leg in the extracted configuration is being configured for being supported on the ground; and wherein each support leg in the retracted configuration is being configured for not being supported on the ground.

Hereby it is assured that the transportation module cannot tilt, especially when carrying a relatively large item such as a foundation for a nacelle.

In an embodiment of the transportation module according to the first aspect of the invention one or more of said support leg arrangements optionally comprises a support leg beam and a support leg guide, wherein said support leg beam is being configured for being displaced translationally within said support leg guide, said support leg thereby being configured for being able to shift configuration between said extracted configuration and said retracted configuration and vice versa.

Hereby support legs may easily be extracted and retracted.

In an embodiment of the transportation module according to the first aspect of the invention it is a requirement that in respect of one or more support legs arrangements, the support leg guide is being arranged on the frame at an angle relative to horizontal of 15 - 70°, such as 20 - 65°, for example 25 - 60°, such as 30 - 55°, e.g. 35 - 50° or 40 - 45°.

These angles have proven advantageous for the purpose.

In an embodiment of the transportation module according to the first aspect of the invention one or more of said support leg arrangements comprise(s) one or more secondary actuators, which upon activation thereof, is/are configured to be able to shift the configuration of this/these support leg arrangement(s) between the extracted configuration and the retracted configuration.

In an embodiment of the transportation module according to the first aspect of the invention the secondary actuator or the secondary actuators is/are being hydraulic actuators;
Hydraulic actuators have proved their strength for the desired purpose.

In an embodiment of the transportation module according to the first aspect of the invention said transportation module optionally comprises a second hydraulic valve, wherein said second hydraulic valve comprises an inlet for pressurized hydraulic fluid, and one or more outlets for pressurized hydraulic fluid, which is to be delivered to said secondary actuator(s); wherein said second hydraulic valve hereby, upon activation thereof, may effect bringing each support leg arrangement to shift between the extracted configuration and the retracted configuration and vice versa.

Hereby is attained an easy way of controlling the electric actuators.

In an embodiment the transportation module may be provided with a hydraulic pump for providing pressurized hydraulic fluid to the actuator or the actuators on the transportation module. Alternatively, pressurized hydraulic fluid may be supplied to the actuator or the actuators on the transportation module via an external hydraulic pump, such as from a hydraulic system in a vehicle.

In an embodiment of the transportation module according to the first aspect of the invention said secondary actuator or said secondary actuators is/are being electric actuators;
Electric actuators have proved their strength for the desired purpose.

In an embodiment of the transportation module according to the first aspect of the invention said transportation module optionally comprises a second electrically relay, wherein said second electrically relay is being configured to, upon activation thereof, to bring said support leg arrangement to shift between said extracted configuration and said retracted configuration and vice versa.

Hereby is attained in an easy way of controlling of the electric actuators.

In an embodiment of the transportation module according to the first aspect of the invention said transportation module is being configured for receiving and transporting a relatively large item in the form of a nacelle for a wind turbine.

In an embodiment of the transportation module according to the first aspect of the invention said frame is having dimensions and locking mechanisms corresponding to a standard 20' or a standard 40' freight container, such as a flat rack container; or said frame is being mounted on such a flat rack container.

In an embodiment of the transportation module according to the first aspect of the invention the dimensions and locking mechanism of the lower part of said frame is/are complying with the standard ISO 668:2013 and/or ISO 1496-1:2013.

These standards ensure compatibility with various transportation means and systems within the transportation industry.

In an embodiment of the transportation module according to the first aspect of the invention the number of actuators in the first set of primary actuators and/or in the second set of primary actuators and/or the number of secondary actuators are independently selected amongst the integers 1-6, such as 2 - 5 or 3 - 4.

In an embodiment of the transportation module according to the first aspect of the invention the pivoting angle in respect of the first pivoting beam and/or in respect of the second pivoting beam between the folded-down orientation and the upright orientation independently is selected from the ranges 70 - 125°, such as 75 - 120°, such as 80 - 115°, e.g. 85 - 110°, for example 90 - 105° or 95 - 100°.

In a second aspect according to the present invention is provided a use of a transportation module of the first aspect of the present invention for transportation of relatively large items.

In an embodiment of the use according to the second aspect of the invention the relatively large item is being a foundation for a wind turbine.

According to a third aspect of the present invention is provided a method for transportation of relatively large items, wherein the method comprises the following steps:
i) providing a transportation module according to the first aspect of the present invention;
ii) if present, optionally extracting the support leg(s) to an extracted configuration;
iii) bringing the first pivoting beam and the second pivoting beam in a folded-down position via said first set of primary actuators and said second set of primary actuators;
iv) arranging the relatively large item on top of the first pivoting beam and the second pivoting beam and fastening said item to said first pivoting beam and the second pivoting beam;
v) bringing said first pivoting beam and said second pivoting beam into an upright position via said first set of primary actuators and said second set of primary actuators;
vi) if present, optionally retracting said support leg or support legs;
vii) transporting said relatively large item on said transportation module.

In an embodiment of the method according to the third aspect of the invention the relatively large item is being a foundation for a wind turbine.

In an embodiment of the method according to the third aspect of the invention the relatively large item will in step iv) be arranged on top of the first pivoting beam and the second pivoting beam in an orientation in which the tower end of the nacelle foundation is facing downward.

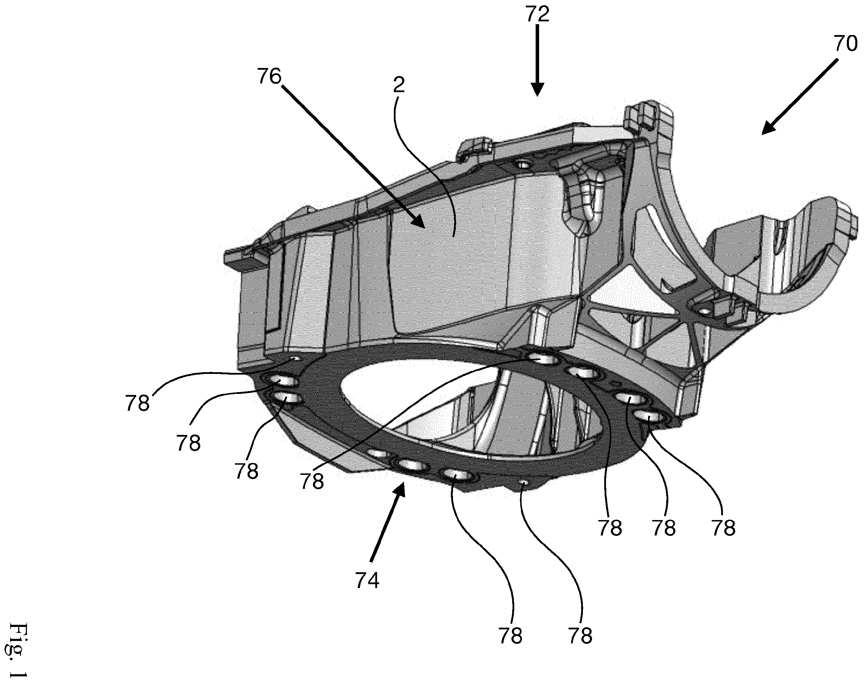

Now referring to the figures for better illustration of the present invention, fig. 1 shows a nacelle foundation for a wind turbine.

The nacelle foundation 2 is manufactured from steel and comprises a lower tower end 74 which is configured for being pivotally mounted at an upper end of a wind turbine tower. The nacelle foundation also comprises a hub end 70 and it is seen that this hub end 70 comprises a hole which has been prepared in such a way that a rotor axle at least partly can be accommodated in this hole.

In the opposite end of the tower end 74 of the nacelle foundation 2 an upper part 72 is being present and the nacelle moreover comprises side part 76. Opposite to the side part 76 a similar, opposite side part is present (not seen in Fig. 1).

Traditionally this type of nacelle foundations has, during transportation, been oriented in the orientation corresponding to the orientation applied in its mounting on a wind turbine tower.

Accordingly, a nacelle foundation will during transportation traditionally be oriented in such a way that the tower end 74 turns downward and that the upper part 72 turns upward and in such a way that the longest extension of the nacelle foundation is being parallel to the driving direction. Hereby the direction, which is being defined by a line connecting to opposite side parts, will be transversal to the driving direction.

The advantage of this orientation during transportation is that the nacelle foundation in this orientation by virtue of the many holes 78 in the tower end 74 of the foundation, easily can be safe and securely fastened to the transport vehicle.

As the extension of the nacelle foundation in the direction, being defined by a line connecting two opposite side parts, will be larger than the extension of the nacelle foundation in the direction defined by a line connecting the upper part 72 with the tower end 74, it can be concluded that in the traditional transportation orientation of the nacelle foundation, the nacelle foundation during transportation has a non-optimum (large) width transverse to the driving direction and this implies certain challenges relating to conducting such transportation, as explained in the introduction of this patent application.

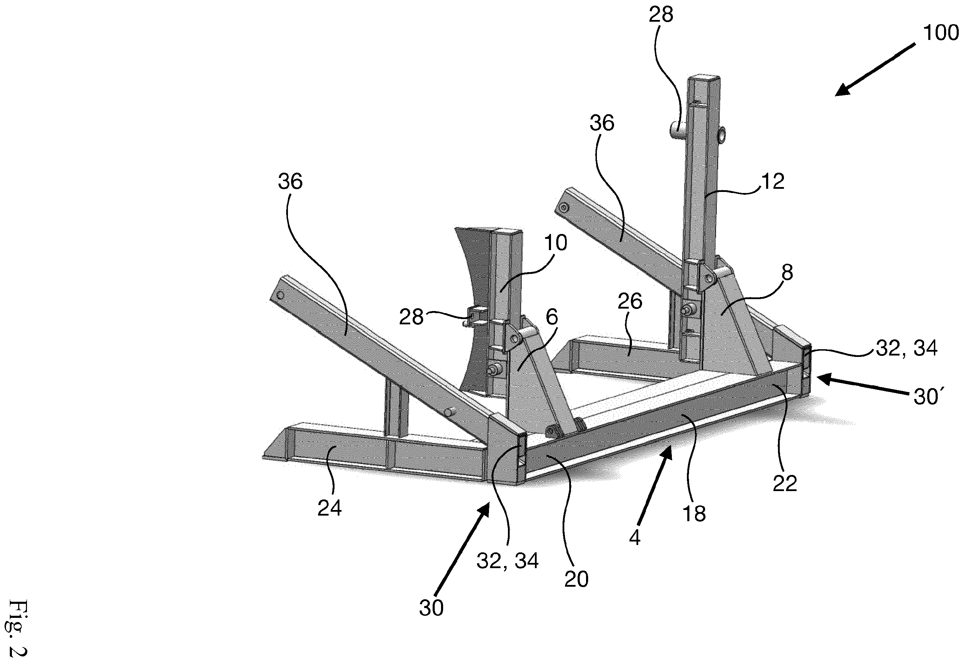

Fig. 2 shows in a perspective view a transportation module 100 according to the first aspect of the present invention.

The transportation module 100 comprises in the orientation intended during use a frame 4.

The frame 4 comprises a longitudinal girder 18 having a first end 20 and a second end 22. In the first end 20 of the longitudinal girder 18 is arranged a first transversal beam 24, and in the other end 22 of the longitudinal girder 18 is arranged a second transversal beam 26.

The frame 4 comprises a first support post 6 which is being mounted on the frame and a second support post 8 which is being mounted on the frame.

The frame additionally comprises a first pivoting beam 10 which in a pivoting fashion is being suspended on the first support post 6 along with a second pivoting beam 12 which in a pivoting fashion is being suspended on the second support post 8.

Hereby is attained that the first pivoting beam 10 and the second pivoting beam 12 may shift configuration between a folded-down orientation and an upright orientation and vice versa.

This shift in configuration between a folded-down orientation and an upright orientation is brought about by means of a first set of primary actuators 16 which are being configured to alter position of the first pivoting beam and via a second set of primary actuators 18 which are configured for altering the position of the second pivoting beam (the actuators 16, 18 is not seen in Fig. 2).

In fig. 2 the transportation module 100 is in the configuration intended during transportation, viz. by having the first pivoting beam and the second pivoting beam in an upright orientation.

Fig. 2 shows that the first pivoting beam 10 and the second pivoting beam 12 comprise a fasting device 28 for fastening a nacelle foundation, to be transported. In Fig. 2 is seen that each fastening device 28 is in the form of a protrusion. This protrusion is being configured for entering into engagement with a hole 78 in the tower end 74 of the nacelle foundation 2. This is explained in more detail below.

Other types of fastening devices 28 on the first and/or the second pivoting beam 10,12 may comprise holes, such as treaded holes for fasting of an item on the pivoting beam 10,12.

In fig. 2 is also seen that the frame 4 of the transportation module 100 comprises two support legs arrangements 30,30'. Each support leg arrangement comprises a support leg 32 which is configured for being able to shift configuration between an extracted configuration and a retracted configuration. Each support leg 32 is in the extracted configuration configured for being supported on the ground; and each support leg 32 is in the retracted configuration configured for not being supported on the ground.

The support leg arrangement 30,30' comprises a support leg beam 34 and a support leg guide 36.

The support leg beam 34 is configured to be able to be displaced translationally within the support leg guide 36, thereby making the support leg 32 being configured to be able to shift configuration between the extracted configuration and the retracted configuration and vice versa.

The support leg arrangement 30,30' each comprises a secondary actuator 38 which upon activation thereof is being configured for altering the configuration for these support leg arrangements 30,30' between the extracted configuration and the retracted configuration (the actuators 38 are not seen in Fig. 2).

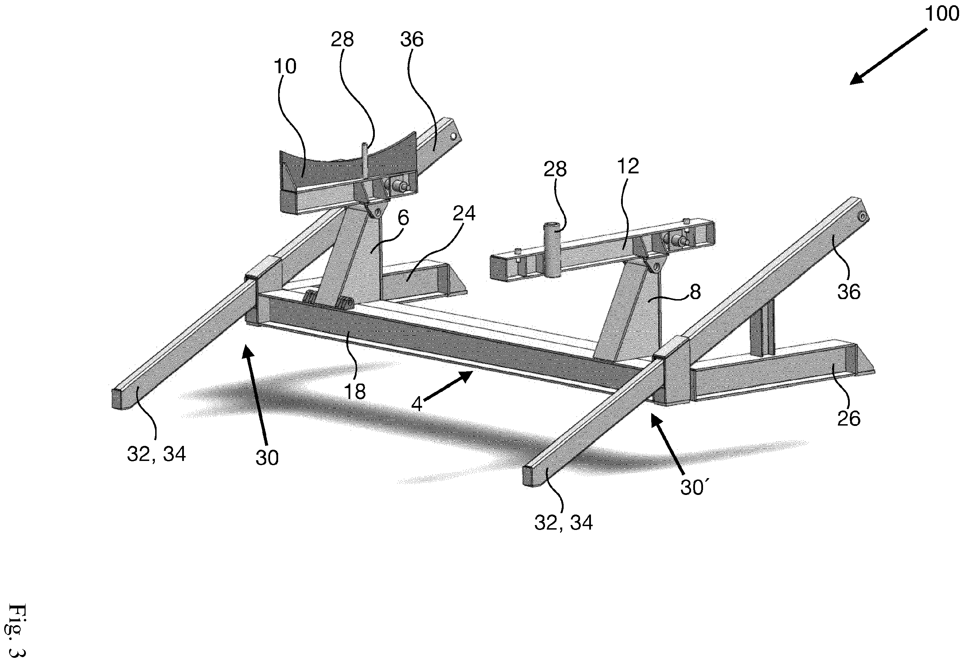

Fig. 3 shows the transportation module 100 of fig. 2 as seen from another perspective. It is seen in fig. 3 that the support legs 32 have altered configuration to an extracted configuration. Moreover, it is seen that the pivoting beams 10 and 12 have altered configuration to a folded-down configuration.

In the configuration illustrated in fig. 3 the transportation module is ready for receiving a relatively large item such as a nacelle foundation to a wind turbine.

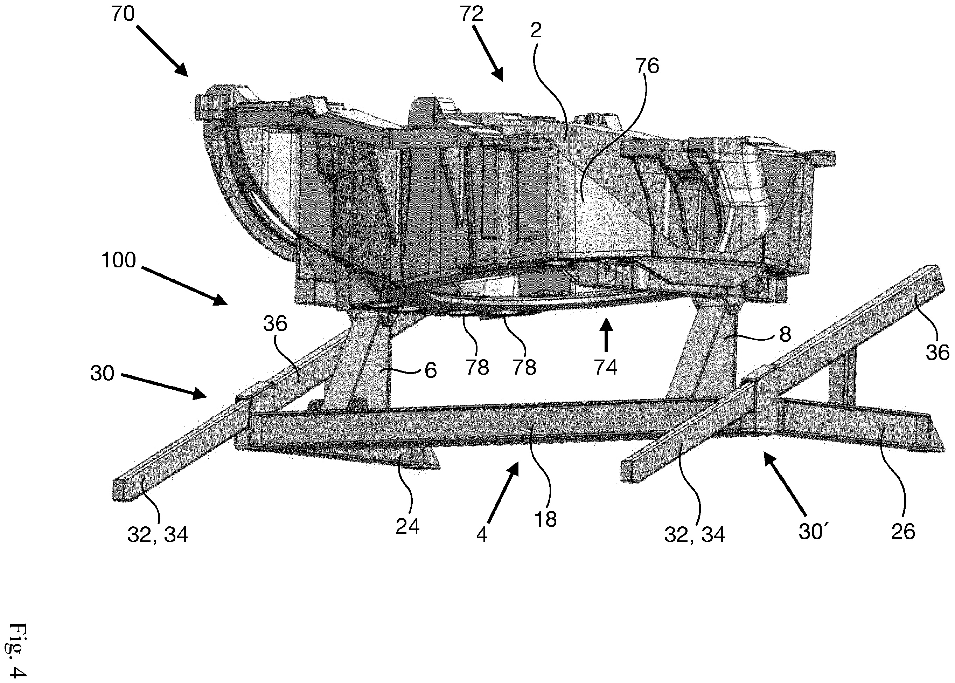

This is illustrated further in Fig. 4.

Fig. 4 shows that a nacelle foundation 2 is arranged on top of the first and the second pivoting beam 10,12. This has been accomplished in such a way that the tower part of the nacelle foundation 2 abuts the first pivoting beam 10 and the second pivoting beam 12 of the transportation module 100. Moreover, the nacelle foundation 2 is arranged on top of the pivoting beams 10,12 in such a way that the fastening devices 28 of these beams engage with holes 78 in the nacelle foundation tower end 74. Hereby the nacelle foundation is secured to the pivoting beams 10,12 of the transportation module 100.

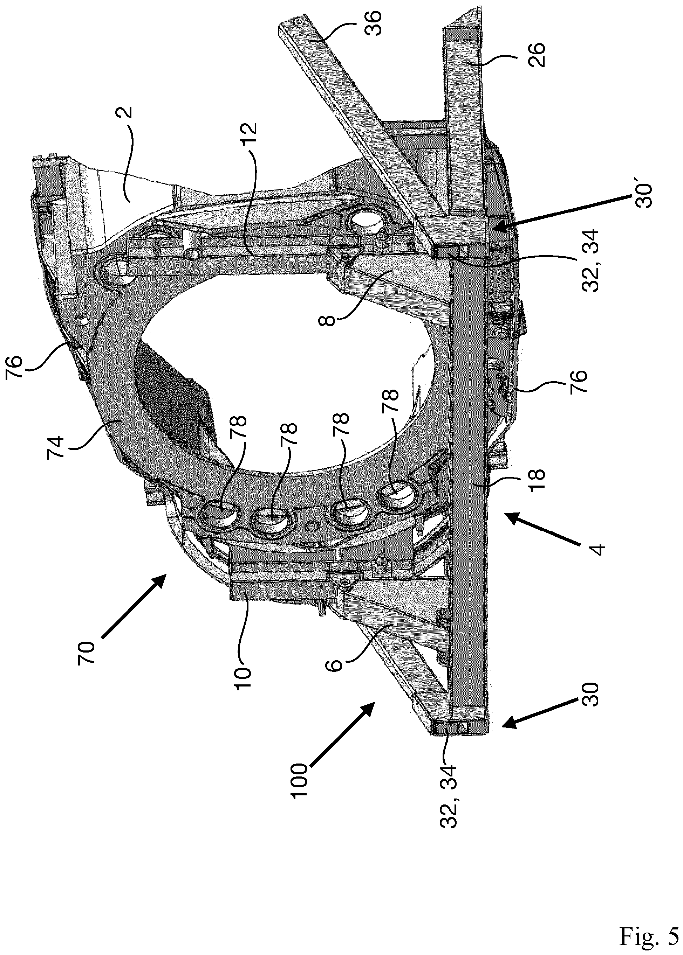

Subsequently the transportation module 100, now carrying the nacelle foundation 2, is ready for being brought into a transportation configuration. This is illustrated in further detail in Fig. 5.

Fig. 5 shows that the transportation module 100 has altered configuration in such a way that the pivoting beams 10,12 via the primary hydraulic actuators (not shown in Fig. 5) have been brought into an upright orientation. Hereby, also the nacelle foundation 2 has been brought into an upright configuration.

Finally, as shown in Fig. 5, the support legs 34 have been retracted into the support leg guides 36 via secondary actuators provided for this purpose (not shown in Fig. 5).

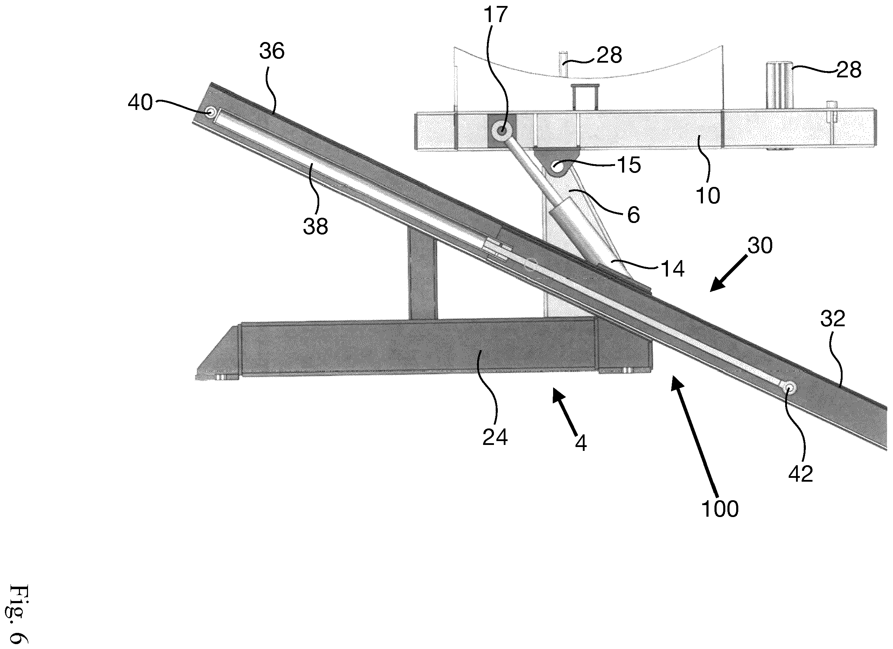

Fig. 6 shows the working mode of the primary actuators 14,16 which are configured for pivoting the pivoting beams 10,12 and the working mode of the secondary actuators which have been configured for displacing the support legs 32 in and out of the associated support leg guide 36.

It is seen in Fig. 6 that the pivoting beam 10 is pivotally suspended in the first support post 6 in a suspension point 15. A primary actuator 14 is having its first end pivotally fastened in a suspension point 17 on this pivoting beam 10. The other end of the actuator is pivotally fastened to the frame 4 of the transportation module 100. Upon activation of the actuator 14 it is thus acknowledged that the pivoting beam will pivot. A similar suspension technique is utilized in respect of the pivoting beam 12 (not illustrated in Fig. 6).

Fig. 6 also illustrates the working mode of the secondary actuator 38 which is being responsible for controlling the extraction of the support legs 32.

Fig. 6 shows that a secondary actuator 38 is being arranged within the support leg guide 36. A first end of the actuator is pivotally suspended in a suspension point 40 within the support leg guide 36. Another end of the actuator is pivotally suspended in a suspension point 42 in the interior of the support leg 32.

Upon actuation of the actuator 38 the support leg 32 hereby may be retracted into and ejected from the support leg guide 36.

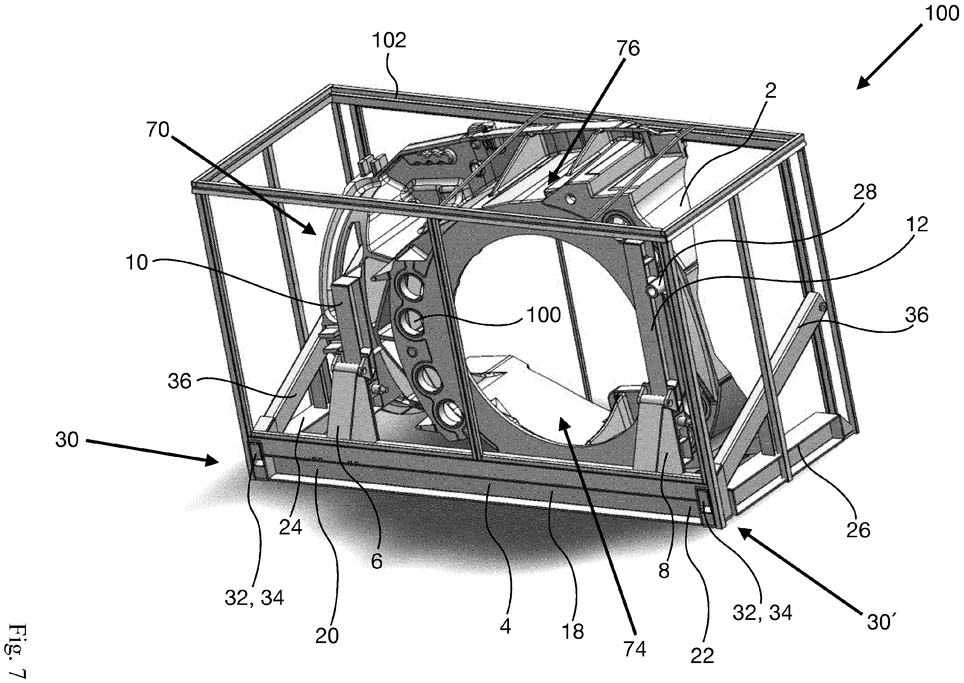

Fig. 7 shows the transportation module with nacelle foundation of fig. 5 wherein the transportation module has been provided with a super structure 102 for protection of the nacelle foundation

It is understood that all features and effects described above and in the appended claims regarding one aspect of the present invention and embodiments thereof applies equally well in respect of the other aspects of the present invention and embodiments thereof.

### List of reference numerals

- 2: Item to be transported
- 4: Frame
- 6: First support post
- 8: Second support post
- 10: First pivoting beam
- 12: Second pivoting beam
- 14: First set of primary actuators
- 15: Suspension point
- 16: Second set of primary actuators
- 17: Suspension point
- 18: Longitudinal girder of frame
- 20: First end of longitudinal girder of frame
- 22: Second end of longitudinal girder of frame
- 24: First transversal girder
- 26: Second transversal girder
- 28: Fastening device
- 30,30': Support leg arrangement
- 32: Support leg
- 34: Support leg beam
- 36: Support leg guide
- 38: Secondary actuator
- 40,42: Suspension point
- 70: Hub end of nacelle foundation
- 72: Upper part of nacelle foundation
- 74: Tower end of nacelle foundation
- 76: Side part of nacelle foundation
- 78: Hole in tower end of nacelle foundation
- 100: Transportation module
- 102: Superstructure

## Claims

1. Transportation module (100) for receiving and transportation of relatively large items (2) in the form of a foundation for a nacelle for a wind turbine, wherein said transportation module in the orientation intended during use comprises a frame (4);
wherein said frame comprises a first support post (6) which is mounted on said frame (4);
wherein said frame comprises a second support post (8), which is mounted on said frame (4);
wherein said frame comprises a first pivoting beam (10) which is being pivotally suspended on said first support post (6);
wherein said frame comprises a second pivoting beam (12) which is being pivotally suspended on the second support post (8);
wherein said first pivoting beam (10) is being suspended on said first support post (6) via a first set of primary actuators (14) which are being configured for being able to alter said position of the first pivoting beam between a folded-down orientation and an upright orientation and vice versa;
wherein said second pivoting beam (12) is being suspended on said second support post (8) via a second set of primary actuators (16) which are being configured for being able to alter the position of said second pivoting beam between a folded-down orientation and an upright orientation and vice versa.

2. Transportation module (100) according to claim 1, wherein said frame comprises:
- a longitudinal girder (18) having a first end (20) and a second end (22);
- a first transversal girder (24);
- a second transversal girder (26);
wherein said first transversal girder (24) is being connected to said longitudinal girder (18) and wherein said second transversal girder (26) is being connected to said longitudinal girder (18).

3. Transportation module (100) according to claim 2, wherein said transversal girder (24) is connected to said longitudinal girder (18) at the first end (20) thereof; and wherein said second transversal girder (26) is being connected to said longitudinal girder (18) at the second end (22) thereof.

4. Transportation module (100) according to any of the preceding claims wherein said first pivoting beam (10) comprises one or more fastening devices (28) for fastening the item to be transported and/or wherein said second pivoting beam (12) comprises one or more fastening devices (28) for fastening the item (2) to be transported;
and optionally wherein said fastening device(s) (28) on said first and/or said second pivoting beam (10,12) independently comprise(s) protrusions or holes, such as treaded holes for fastening an item on said pivoting beam (10,12).

5. Transportation module (100) according to any of the preceding claims wherein said first pivoting beam (10) and said second pivoting beam (12) are being connected via a common support frame;
and/or wherein said first pivoting beam (10) and said second pivoting beam 12 are configured to be able to move synchronically between said folded-down orientation and said upright orientation and vice versa.

6. Transportation module (100) according to any of the preceding claims wherein said first set of primary actuators (14) and/or said second set of primary actuators (16) independently is/are hydraulic actuators;
wherein said transportation module optionally comprises a first hydraulic valve, wherein said first hydraulic valve comprises an inlet for pressurized hydraulic fluid, and one or more outlets for pressurized hydraulic fluid, which is to be delivered to said first set of primary actuators (14) and/or said second set of actuators (16); wherein said first hydraulic valve hereby, upon activation thereof, may effect bringing said first pivoting beam (10) and/or said second pivoting beam (12) to shift between said folded-down orientation and said upright orientation and vice versa.

7. Transportation module (100) according to any of the preceding claims 1 - 5 wherein said first set of primary actuators (14) and/or said second set of primary actuators (16) independently is/are electric actuators;
wherein said transportation module optionally comprises a first electrically relay, wherein said first electrically relay is being configured to, upon activation thereof, to effect bringing said first pivoting beam (10) and/or said second pivoting beam (12) to shift between said folded-down orientation and said upright orientation and vice versa.

8. Transportation module (100) according to any of the preceding claims wherein said frame comprises one or more support leg arrangements (30,30'), wherein each support leg arrangement comprises a support leg (32), wherein each support leg is being configured for being able to shift between an extracted configuration and a retracted configuration, wherein each support leg (32) in the extracted configuration is being configured for being supported on the ground; and wherein each support leg (32) in the retracted configuration is being configured for not being supported on the ground;
wherein one or more of said support leg arrangement (30,30') optionally comprises a support leg beam (34) and a support leg guide (36), wherein said support leg beam (34) is being configured for being displaced translationally within said support leg guide (36), said support leg (32) thereby being configured for being able to shift configuration between said extracted configuration and said retracted configuration and vice versa.

9. Transportation module (100) according to claim 8 wherein one or more of said support leg arrangements (30,30') comprise(s) one or more secondary actuators (38), which upon activation thereof, is/are configured to be able to shift the configuration of this/these support leg arrangement(s) (30,30') between the extracted configuration and the retracted configuration.

10. Transportation module (100) according to claim 9 wherein the secondary actuator or the secondary actuators (38) is/are being hydraulic actuators;
wherein said transportation module optionally comprises a second hydraulic valve, wherein said second hydraulic valve comprises an inlet for pressurized hydraulic fluid, and one or more outlets for pressurized hydraulic fluid, which is to be delivered to said secondary actuator(s) (38); wherein said second hydraulic valve hereby, upon activation thereof, may effect bringing each support leg arrangement (30,30') to shift between the extracted configuration and the retracted configuration and vice versa.

11. Transportation module (100) according to claim 9 wherein said secondary actuator or said secondary actuators (38) is/are being electric actuators;
wherein said transportation module optionally comprises a second electrically relay, wherein said second electrically relay is being configured to, upon activation thereof, to bring said support leg arrangement(s) (30,30') to shift between said extracted configuration and said retracted configuration and vice versa.

12. Transportation module (100) according to any of the preceding claims wherein said frame (4) is having dimensions and locking mechanisms corresponding to a standard 20' or a standard 40' freight container, such as a flat rack container; or wherein said frame is being mounted on such a flat rack container.

13. Transportation module (100) according claim 12 wherein the dimensions and locking mechanism of the lower part of said frame (4) is/are complying with the standard ISO 668:2013 and/or ISO 1496-1:2013.

14. Use of a transportation module (100) according to any of claims 1 - 13 for transportation of relatively large items (2) in the form of a foundation for a nacelle for a wind turbine.

15. A method for transportation of relatively large items (2), wherein said method comprises the following steps:
i) providing a transportation module (100) according to any of the claims 1 - 13;
ii) if present, optionally extracting the support leg(s) (32) to an extracted configuration;
iii) bringing the first pivoting beam (10) and the second pivoting beam (12) in a folded-down position via said first set of primary actuators (14) and said second set of primary actuators (16);
iv) arranging the relatively large item (2) on top of the first pivoting beam (10) and the second pivoting beam (12) and fastening said item to said first pivoting beam and the second pivoting beam;
v) bringing said first pivoting beam (10) and said second pivoting beam into an upright position via said first set of primary actuators (14) and said second set of primary actuators (16);
vi) if present, optionally retracting said support leg or support legs (32);
vii) transporting said relatively large item (2) on said transportation module (100).
